# EUROPEAN PATENT APPLICATION

(11) **EP 4 838 291 A1**
(43) Date of publication of application: **11.11.2026**
(21) Application number: 25175258.0
(22) Date of filing: 09.05.2025
(51) Int. Cl.: G02C 7/02, G02C 13/00

(54) **POINT CLOUD ALIGNMENT FOR CHARACTERIZING LENSES**

(71) Applicant: Carl Zeiss Vision International GmbH, 73430 Aalen (DE)
(72) Inventor: Frank, Uwe, 73430 Aalen (DE); Schoen, Roland, 73430 Aalen (DE)
(74) Representative: Carl Zeiss AG - Patentabteilung

(57) **Abstract**

The present invention relates to a computer-implemented method configured for determining an orientation of a sampled surface (250, 260) with respect to a design surface characteristic, wherein the sampled surface (250, 260) corresponds to a plurality of measurement points (210) representing a surface of a spectacle lens (230) characterized in that the determining of the orientation is performed using a symmetry characteristic of the design surface characteristic and wherein the orientation corresponds to an extremum of a function S, the function S providing a measure for a deviation of a subset of measurement points from the design surface characteristic, the subset of measurement points being chosen according to the symmetry characteristic.

## Description

The present invention relates to a computer-implemented method, a computer-implemented device, a system and a computer program configured for determining an orientation of a sampled surface of a lens with respect to a design surface. Moreover, the present invention relates to a method configured for designing a virtual representation of a spectacle lens, and to a data set containing computer-readable instructions for controlling one or more manufacturing machines to produce such a lens.

The inventive concept can be applied to surfaces other than surfaces of spectacle lenses, such as molds used for casting precursor products e.g. of ophthalmic lenses. Such molds usually define the front- or back-side of such a precursor product and are arranged substantially parallel to each other such that a casting substance can be filled in between the two molds.

Ophthalmic lenses represent a commonly used type of lenses which are applied to correct ametropia. Ophthalmic lenses may be provided as spectacle lenses, contact lenses, intraocular lenses and/or as any other type of lens suitable for an envisaged application. Ophthalmic lenses are precision optical devices designed to correct vision defects and enhance visual acuity. The term "spectacle lens" is understood as an ophthalmic lens worn in front of, but not in contact with, the eye. Hence, lenses to be inserted into a XR-device (eXtended Reality device) such as an AR, MR or VR display device fall under the term "spectacle lens".

These lenses are manufactured to meet design specifications and to ensure optimal performance and optical properties for a desired application. The design specification may, *inter alia,* be related to material thicknesses, material selection, stresses in the material, etc. However, lenses, such as spectacle lenses, are susceptible to deformations, which can significantly impact their optical properties and effectiveness.

Deformations in lenses can arise from various sources. Thermal effects during the manufacturing process, particularly during the cooling-off phase after production, can lead to internal stresses and subtle shape changes. Additionally, the process of fitting lenses into frames can induce mechanical stresses, potentially altering the lens geometry thus affecting its optical characteristics.

Typical lenses may comprise two lens surfaces, notable a front surface and a back surface, which are, arranged in a specific manner to fulfill desired optical parameters. That is, an ideal lens may be referred to as a lens comprising two surfaces which meet an intended design.

However, in case thermal or other mechanical stresses are present in the lens, one or both surfaces may be deformed effectively leading to a deviation of the shape of the lens from an intended lens design. This may be accompanied by unfavorable effects with respect to refractive parameters of the lens which may deviate from its originally set design goals. These refractive parameters may, *inter alia,* at least partially, be derivable from a surface shape of a lens. In this regard, the surface of a lens may typically be seen as a crucial quality parameter for characterizing a (manufacturing) quality of the lens.

Lenses as describes above may be designed to meet demands for a specific correction of visual defects. To achieve this, a theoretical model of a lens may be designed which possesses respective properties for exhibiting desired design goals (e.g., certain refractive parameters). However, the decisive quality factor is often not how closely the (geometric) design and/or shape is achieved in the final product, but how well the lens meets the design requirements for vision corrections after all.

Machines used for the production of lenses may only be provided with manufacturing information regarding a shape/geometry of a lens. However, machines used for the production of lenses may not directly be provided with information on the desired refractive properties of the lens. This discrepancy may effectively provide a source of deviation of a physical lens design from an intended design goal of a lens that is to be manufactured.

To ensure that a manufactured lens meets its design requirements, a thorough characterization of the shape of the lens may be seen crucial. Current methods for characterizing lens parameters such as deformations often rely on complex measurement setups that require a systematic and precise scanning of the lens surface. This requires complex and expensive set ups as well as a careful alignment of the lenses within the setup with respect to certain reference points or reference axes. However, no systematic scanning procedure is available which would allow a scanning of the surface of a lens with sufficient accuracy and efficiency without a need for a cumbersome and undue characterization complexity.

A sampling of a surface of such a lens, e.g., by means of a measurement device may lead to a point cloud of individual measurement points (e.g., a plurality of measurement points) for, e.g., each of the front surface and potentially of the back surface of the sampled lens. However, in many cases, the totality of individual measurement points may at most represent a sub-area of the surface of the lens. In other words, the individual measurement points may represent a surface area that is smaller than the surface area of the lens. This may be due to practical limitations of the measurement device that is used for acquiring the individual data points and/or due to limited measurement time. Consequently, the individual measurement points may represent an arbitrary subarea of the surface area of the lens which may not easily be aligned with respect to the surface of the lens. In other words, parameters associated with the sampled sub-area of the surface of the lens may only be known with a certain level of ambiguity.

What is more, the individual measurement points may be acquired in a coordinate system (which may act as a reference frame) that is linked to the measurement device wherein a design of the lens may be associated with a design coordinate system that may be different from the coordinate system of the measurement device. In some cases, the coordinate system of the measurement device may not be trivially linked to the design coordinate system as the relative orientations of the design coordinate system and the coordinate system of the measurement device may not be known or not be known to a desired level of accuracy. Also, there may not be a clear reference which may be used to align the coordinate system of the measurement device with the design coordinate system.

As a result, the characterization of the surface of a lens may be seen as complex, time-consuming, demanding an elevated level of operator expertise, and may be prone to errors, and may at most be performed with a certain level of ambiguity.

DE 10 2014 208 636 B4 discloses a method for measuring a decentering and tilting of surfaces of an optical element, wherein at least all optically used and mount-relevant partial surfaces of a surface of the optical element and reference surfaces of the optical element are detected over their entire surface and are referenced to one another in a common coordinate system, and in each case a surface shape deviation of the partial surfaces and reference surfaces are each determined relative to an associated nominal surface stored for the optical element, wherein a position of the partial surfaces and reference surfaces in the common coordinate system is determined from the respective surface shape deviation, wherein at least one tilt and at least one decentration are determined from the position as a function of a shape of the respective partial surface and reference surface in the coordinate system.

DE 10 2017 006 345 A1 discloses a method for determining the decentration of a transmissive actual optic in relation to a transmissive target optic with ideally oriented optical surfaces in a reference coordinate system or for determining the thickness of a lens or the distance between lenses of the optic, wherein measuring points on several optical surfaces of the actual optic are detected with a scanning sensor using the transmitted light method.

WO 2009/124767 discloses a device for measuring the topography of curved rotationally symmetrical or cylindrical surfaces, especially the surfaces of lenses. Said device comprises a topography sensor which is used to measure the topographical data of a point, a line or a spatial element on the surface. The topography sensor and the surface can be displaced in relation to each other in a plane of displacement. Said plane of displacement is arranged at an angle unequal 90° with respect to an axis of symmetry or plane of symmetry of the rotationally symmetrical or cylindrical surface. The device according to the invention is characterized by an additional centering sensor which allows the high-precision measurement of the axis of symmetry or plane of symmetry of the article, thereby making it e.g. possible to measure merely half diagonal cuts through the surface and to determine the other half of the diagonal cuts by mirroring by calculation the measured half diagonal cuts on the axis of symmetry or plane of symmetry.

Thus, there is a need to further improve the characterization procedure of optical elements such as, e.g., spectacle lenses.

For example, the objective technical problem to be solved by the present invention may be seen in improving the alignment process of an acquired plurality of measurement points that correspond to a sampled surface of a lens relative to a design surface of the lens.

This aspect is addressed in a first aspect of the invention which suggests a computer-implemented method configured for determining an orientation of a sampled surface with respect to a design surface characteristic, wherein the sampled surface corresponds to a plurality of measurement points representing a surface of a lens. The computer-implemented method may comprise that the determining of the orientation is performed using a symmetry characteristic of the design surface characteristic and wherein the orientation corresponds to an extremum of a function S, the function S providing a measure for a deviation of a subset of measurement points from the design surface characteristic, the subset of measurement points being chosen according to the symmetry characteristic.

In some examples, the function S may be associated with an assignment of a value of the function S to a determined orientation of the sampled surface with respect to the design surface characteristic.

In some examples, the extremum may be a minimum of the function S. Alternatively, the extremum may be a maximum of the function S.

In some examples, the extremum may be associated with an orientation of the sampled surface with respect to the design surface characteristic that represents a best (optimized) orientation of the sampled surface with respect to the design surface characteristic, preferably out of a plurality of determined orientations of the sampled surface with respect to the design surface characteristic. In other words, each of the determined orientations that are associated with a value of the function S that is different from a value of the extremum may correspond to a determined orientation that less accurately reflects an orientation of the plurality of measurement points with respect to the design surface characteristic than the best orientation.

In some examples, an orientation may be considered as best or optimized if a sum over an individual metric distance (or metric distances) between each measurement point of the subset of measurement points and corresponding points on the sampled surface is minimized.

In some examples, the subset may comprise a single measurement point chosen from the plurality of measurement points. In some examples, the subset may comprise more than one measurement point. In some examples, the subset may comprise between 10 and 100 measurement points. In some examples, the subset may comprise between 100 and 1000 measurement points. In some examples the subset may comprise more than 1000 measurement points.

In some examples, the area sampled by the plurality of measurement points may be smaller than a surface area of the lens. In some examples, the area sampled by the plurality of measurement points may possess an outer shape of a circle, an ellipsoid, a rectangle or any other suitable shape. In some examples, the plurality of measurement points may be acquired along a trajectory of a spiral.

This aspect may support an automated, fast an accurate determination of an orientation of the sampled surface with respect to the design surface characteristic. What is more, the determination of the orientation of the sampled surface with respect to the design surface characteristic may be performed without any need for a reference (such as, e.g., reference marks on the design surface characteristic relative to which the subset of measurement points is to be oriented). This may generally simplify the determining of the orientation and may thus provide a more efficient and/or robust method for determining the orientation of the sampled surface with respect to the design surface characteristic. Moreover, since the area sampled by the plurality of measurement points may be smaller than the surface area of the lens, a sampling procedure of the sampled surface may be simplified and performed in a more efficient and time-consuming manner (e.g., as the amount of measurement points that need to be processed may be reduced which may additionally reduce a processing time of the determination of the orientation) as compared to sampling procedures which rely on a sampling of an entire surface.

According to an embodiment, the determining may comprise executing at least one rotational transformation of the plurality of measurement points about a first rotational axis and/or at least one translational transformation of the plurality of measurement points.

The plurality of measurement points may be representative of a front surface and/or a back surface of the optical element.

In some examples, the at least one rotational transformation may be a rotation about an x-axis of a Cartesian coordinate system. In some examples, the at least one rotational transformation may be a rotation about a y-axis of a Cartesian coordinate system. In some examples, the at least one rotational transformation may be a rotation about a z-axis of a Cartesian coordinate system. Instead of a Cartesian coordinate system, also others can be used as appropriate, i.e., in some cases using a spherical coordinate system may be preferrable.

In some examples, the translational transformation may comprise a translational alignment of a coordinate system of the plurality of measurement points relative to a coordinate system of the design surface characteristic such that respective origins of the coordinate systems coincide as a result of the translational transformation. In some examples, the coordinate systems, relative to which the plurality of measurement points and the design surface characteristic are referenced to, may be Cartesian coordinate systems.

This may support an efficient alignment of a coordinate system of the plurality of measurement points with respect to a coordinate system of the sampled surface.

According to a further embodiment, the executing of the at least one rotational transformation and/or translational transformation is repeated iteratively.

The iterative execution may comprise iteratively executing the at least one rotational transformation and/or translational transformation such that the extremum of the function S may be optimized (e.g., maximized if the extremum is a maximum or minimized if the extremum is a minimum).

This may support a gradual determining of an optimized orientation of the sampled surface with respect to the design surface characteristic.

According to a further embodiment, the determining may further comprise determining a mathematical fit of the plurality of measurement points to a surface of the lens to obtain a first fitted surface, determining an extremum of the first fitted surface with respect to a coordinate system and determining an extremum of the design surface characteristic with respect to a coordinate system. Moreover, the determining may comprise executing the translational transformation to overlap the determined extremum of the first fitted surface with the determined extremum of the design surface characteristic.

The mathematical fit may be referred to a mathematical function, model, or approximation that best represents a given set of data points (e.g., the plurality of measurement points) according to a specific criterion, such as minimizing the error between the function and the data. This may include linear and nonlinear regressions, polynomial approximations, splines, and/or other curve-fitting techniques used to describe, predict, or interpolate values within the dataset.

In some examples, determining the mathematical fit of the plurality of measurement points may be based on a mathematical function that may represent a polynomial, e.g., a polynomial of order 3, 4, 5, 6, 7, 8, 9 or 10. In some examples, the polynomial may be of an order higher than 10.

The extremum of the first fitted surface may be a maximum, a minimum or a saddle point. In some examples, the maximum or the minimum may be a global extremum. In some examples, the maximum or the minimum may be a local extremum.

In an example, the first fitted surface may be represented in a three-dimensional coordinate system. If the extremum is a minimum, the determining of the extremum of the first fitted surface may comprise determining a lowest/minimum value of the first fitted surface in the three-dimensional coordinate system. The lowest value may correspond to a lowest applicate value. If the extremum is a maximum, the determining of the extremum of the first fitted surface may comprise determining a highest/maximum value of the first fitted surface in the three-dimensional coordinate system.

Determining the mathematical fit may facilitate an interpolation of the (spatially discretized) plurality of measurement points. Therefore, the extremum may be determined more accurately and may also refer to a data point which has not expressly been sampled beforehand.

This may support an alignment of the first fitted surface (and thus also of the plurality of measurement points) relative to the design surface characteristic with respect to a reference point determined on the first fitted surface and the design surface characteristic. This may support a determination of the orientation of the sampled surface with respect to the design surface characteristic.

According to a further embodiment, the determining of the orientation may further comprise executing at least one additional rotational transformation about a second rotational axis that is linearly independent from the first rotational axis.

Linear independence may be referred to the aspect that the second rotational axis may not be represented by the first rotational axis (and vice versa).

In some examples, the first rotational axis may be oriented perpendicular to the second rotational axis.

This may facilitate an improved rotational alignment of the plurality of measurement points relative to the design surface characteristic.

According to a further embodiment, the determining of the orientation may further comprise selecting the subset of measurement points from the plurality of measurement points, determining at least one symmetric partner for each measurement point of the subset of measurement points based on the symmetry characteristic and determining an applicate value for each one of the at least one symmetric partner. Moreover, the determining of the orientation may comprise determining a value of the function S based on an applicate value of the at least one measurement point of the selected subset of measurement points and the applicate value of the determined at least one symmetric partner.

In case of a Cartesian coordinate system, in some examples, the first rotation may be about an x-axis, the second rotation may be about a y-axis. Then, the third rotation may be about a z-axis. In this example, the applicate value may represent a z-value in a Cartesian coordinate system. In some examples, the first rotation may be about the y-axis and the second rotation may be about the x-axis, respectively, notwithstanding that the third rotation may be about the z-axis.

In some examples, at least two symmetric partners may be determined. In some examples, at least three symmetric partners may be determined. In some examples, at least four symmetric partners may be determined. In some examples, the number of determined symmetric partners may depend on the symmetric characteristic.

In an example, in case the assumed symmetry characteristic is reflected by the plurality of measurement points (or the subset), all applicate values may possess a same value.

In some examples, the determining of the value of the function S may comprise calculating a root-mean-square, RMS, value over a pair-wise difference of the determined applicated values and calculating a sum over the respective RMS values for all possible permutations of the applicate values.

This may facilitate a quantitative measure of how well the determined orientation of the sampled surface of measurement points matches the design surface orientation. This may support a decision whether the determined orientation is sufficiently accurate to reflect characteristics of the design surface characteristic (e.g., its shape) or whether a new determination of the orientation of the sampled surface with respect to the design surface characteristic is required.

According to a further embodiment, the determining of the applicate value for each one of the at least one symmetric partner may be determined based on a mathematical fit of the plurality of measurement points to an expected shape of the design surface characteristic to obtain a second fitted surface.

In some examples, the mathematical fit of the plurality of measurement points to an expected shape of the design surface characteristic may be based, e.g., on fitting the plurality of measurement points to an aspheric function (e.g., the expected shape of the design surface characteristic may be an aspheric shape).

Determining the applicate value based on the mathematical fit may support a more accurate determination of the applicate value as potential (local) outliers of applicate values that are associated with the sampled plurality of measurement points may effectively be averaged and thus overcome. Moreover, the determining of the value of the function S may become more versatile if the applicate value for each one of the at least one symmetric partner is determined based on the mathematical fit. This may arise from the aspect that a symmetric partner of a selected measurement point may not necessarily have been sampled. Consequently, a respective applicate value of the symmetric partner may not be derivable. However, this drawback may be resolved based on the determination of the second fitted surface which may facilitate an interpolation between the measurement points of the plurality of measurement points such that the determination of a symmetric partner may be facilitated which may lie in between two sampled measurement points.

According to a further embodiment, the determining of the orientation may further comprise iteratively repeating the selecting of the measurement point, the determining of the at least one symmetric partner and the determining of the value of the function S for different rotation angles of the at least one rotational transformation and/or for different translations of the translational transformation.

In some examples, the different rotation angles and/or the different translations may iteratively be determined such that a value of the extremum of the function S is maximized (e.g., if the extremum is maximum) or minimized (e.g., if the extremum is a minimum).

This may support an optimization of a value of the function S which may be representative for an optimization of the determining of the orientation of the sampled surface with respect to the design surface characteristic.

According to a further embodiment, the design surface characteristic may be a design surface characteristic of a lens, such as an ophthalmic lens or a spectacle lens, representing refractive parameters intended for manufacturing.

A design surface (also referred to herein as design) may be referred to as a theoretical model of the lens, such as the ophthalmic lens or spectacle lens mentioned above, that is indicative of a design goal, i.e., an ideal, theoretical implementation of the lens in absence of any manufacturing errors and/or implementation-based errors. The design of the lens may be referred to as the design of the lens, which when implemented accordingly, does not exhibit any undesired optical properties and that instead fulfills its originally set design goal. Thus, in an ideal world (i.e., in an absence of manufacturing errors and/or manufacturing tolerances), the plurality of measurement points may coincide with the design. In this context, a design surface characteristic may represent at least a portion of a design surface. That is, the design surface characteristic may be representative for a sub-area of an area of the design surface, e.g., a sub-area that surrounds an extremum (with respect to a coordinate system) of the design surface and/or a sub-area of the design surface that is indicative of a shape of the design surface at a certain radial distance from a center point (e.g., an extremum) of the design surface. In some examples, the design surface characteristic may refer to an entire surface area of the design surface. In some examples, the design surface characteristic may be any other suitable characteristic which may be indicative of an optical parameter of the lens (e.g., a refractive parameter) which is to be characterized.

The refractive parameters may represent one or more of an index of refraction of the lens (possible a location-dependent index of refraction), a dispersion of the lens (e.g., represented by a (location-dependent) Abbe-number), a radius of curvature of the respective lens (e.g., defining a shape of the respective surface and thus also of the lens), a focal length of the lens, a numerical aperture and/or information on optional coatings which may be deployed on the surface of the lens. In some examples, the refractive parameters may refer to other parameters not expressly mentioned herein.

This may support a planned and deterministic manufacturing of a lens according to design specifications. Moreover, the design surface characteristic may allow a simulation whether planned refractive parameters indeed lead to an intended physical-world behavior of the respectively designed surface and the lens, respectively.

According to a further embodiment, the symmetry characteristic is one of a folding symmetry, a reflection symmetry, a rotation symmetry, a mirror symmetry, a line symmetry, or a mirror-image symmetry, additionally an expected violation or absence of one of these symmetries may be considered.

Folding symmetry may be referred to as a geometric property of a geometric system (e.g., a lens or a surface of a lens) which may allow that the system can be mapped onto itself through a specific folding operation. This means that when the structure is folded along a defined axis or set of axes, corresponding parts of the system align perfectly, preserving the overall shape and proportions of the system.

Reflection symmetry (or mirror symmetry) may be referred to as a geometric property of a geometric system (e.g., a lens or a surface of a lens) where the system remains unchanged when reflected across a specific plane, known as the line or plane of symmetry. If an object exhibits reflection symmetry, one half is the mirror image of the other, ensuring structural balance and consistency.

Rotation symmetry may be referred to as a geometric property of a geometric system (e.g., a lens or a surface of a lens) where the system remains unchanged after being rotated about a specific point or axis by a certain angle. If a system exhibits rotation symmetry, it can be mapped onto itself through one or more rotations of less than 360 degrees. The number of times the object aligns with its original position within a full rotation may determine its order of rotation symmetry.

Line symmetry, also bilateral symmetry or mirror symmetry, may be referred to as a geometric property where a geometric system (e.g., a lens or a surface of a lens) can be divided by a straight line into two identical halves that are mirror images of each other. The dividing line, called the axis of symmetry, may ensure that every point on one side has a corresponding point on the other side at an equal distance.

In some examples, only a single symmetry characteristic may be considered when determining the orientation of the sampled surface with respect to the design surface characteristic. In some examples, more than one symmetry characteristic may be considered when determining the orientation of the sampled surface with respect to the design surface characteristic.

In case the symmetry characteristic is a folding symmetry, at least three symmetric partners may be determined.

By considering symmetry properties of the lens, a simplified determination of the orientation of the sampled surface with respect to the design surface characteristic may be supported.

According to a further embodiment, the function S may be representative for a score value that quantifies the deviation of the subset of measurement points from the design surface.

That is, a smaller score value may be indicative of a better alignment between the plurality of measurement points and the design of the optical element (i.e., a smaller deviation) as compared to a larger score value. In some examples, the score value may lie in between 0 and 1. Alternatively, the score value may be any value in between 0 and 100. In some examples, the score value may be any value in another suitable range.

This may enable a quantitative evaluation of how well the determined orientation of the sampled surface matches the design surface orientation. Moreover, the score value may allow a comparison of two or more different determined orientations of the sampled surface with respect to the design surface orientation to support a determination which one of the two or more determined orientations may be representative for a best determined orientation of the sampled surface with respect to the design surface orientation.

According to a second aspect, a computer program is suggested. The computer program comprises instructions which, when the program is executed by a computer, cause the computer to carry out the steps of the computer-implemented method as set out herein.

A computer program, such as a computer program means, may for example be provided or delivered as a storage medium, such as a memory card, USB stick, CD-ROM, DVD, or in the form of a downloadable file from a server on a network. This can be done, for example, in a wireless communication network by transferring a corresponding file with the computer program or the computer program means.

According to a third aspect, a computer-implemented device for determining an orientation of a sampled surface with respect to a design surface characteristic, wherein the sampled surface corresponds to a plurality of measurement points representing a surface of a lens is suggested which comprises means for carrying out the steps of the computer-implemented method as set out herein and/or means for executing the computer program as set out herein.

The means for carrying out and/or the means for executing may be provided as a respective processor (e.g., as a central processing unit (CPU)) and/or a field programmable gate array (FPGA)) and/or a graphics processing unit (GPU) and/or a tensor processing unit (TPU). In some examples, the respective means may comprise a memory (e.g., a storage medium) as set out in further detail herein.

According to a fourth aspect, a method being configured for (a) designing a virtual representation of a lens configured for the purpose of use for manufacturing said lens and/or (b) manufacturing a lens based on output data of the computer-implemented method as set our herein is suggested.

In some examples, the virtual representation may be a computer model of the lens. The computer model may be computed based at least in part on the sampled surface (and preferably based on the determined orientation of the sampled surface) of the lens.

This may facilitate a tailored manufacturing process of a lens which takes information derivable from the sampled surface of the lens into account. Thus, undesired properties (e.g., refractive properties) exhibited by the sampled surface of the lens may iteratively be compensated. Therefore, an improved manufacturing process of a lens may efficiently be supported.

According to a fifth aspect, a data set (a) stored on a computer-readable medium or (b) carried by a data signal is suggested. The data set may comprise data containing computer-readable instructions for controlling one or more manufacturing machines in order to produce a lens based on output data of the computer-implemented method as set out herein.

One or more algorithms/computer programs described herein may be embodied directly in hardware (e.g., by appropriate means of a computer-implemented device as disclosed herein, e.g., the means for carrying out and/or the means for executing), in a software module executed by a processor, or in a combination of both. A software module may reside in random access memory (RAM), flash memory, read only memory (ROM), electrically programmable ROM (EPROM), electrically erasable programmable ROM (EEPROM), registers, a hard drive, a removable disc, a CD-ROM, or any other form of storage medium known in the art. An exemplary storage medium is coupled to the processor so that the processor can read information from the storage medium and write it to the storage medium. Alternatively, the storage medium can also be integrated into the processor. The processor and the storage medium can be housed in an application-specific integrated circuit (ASIC). Alternatively, the processor and the storage medium can be accommodated as discrete components in any component of a mobile computer platform. The computer program can also be executed on a field programmable gate array (FPGA), for example.

In this case, the term 'one' is not necessarily to be understood as being limited to exactly one element. Rather, several elements, such as two, three or more, can also be provided. Any other counting word used here is also not to be understood as meaning that there is a restriction to exactly the specified number of elements. Rather, numerical deviations upwards and downwards are possible, unless otherwise stated.

The embodiments and features described with respect to the device or system apply accordingly to the proposed method and vice versa.

Other possible implementations of the invention also include combinations of features or embodiments described above or below that are not explicitly mentioned herein. The skilled person will also add individual aspects as improvements or additions to the respective basic form of the invention.

The term *"means"* may be referred to as a single *"means"* (e.g., a single entity configured to provide a certain function). In some examples, the term *"means"* may also refer to a plurality of *"means"* (e.g., a plurality of entities configured to provide a certain functionality).

Further advantageous embodiments and aspects of the invention are the subject matter of the subclaims and of the examples of embodiments of the invention described below. In the following, the invention is explained in more detail by means of preferred embodiments with reference to the enclosed figures.
Fig. 1 shows a cross-sectional view of a lens such as an ophthalmic lens or a spectacle lens;
Figs. 2A and 2B show exemplary illustrations of a plurality of measurement points associated with a surface of such a lens;
Fig. 3 shows an exemplary flowchart of a computer-implemented method;
Fig. 4 shows an illustration of a plurality of measurement points centered in an aligned reference coordinate system;
Fig. 5 shows an exemplary flowchart of a computer-implemented method;
Fig. 6 shows an exemplary computer-implemented device;
Fig. 7 shows an exemplary system; and
Fig. 8 shows an exemplary flowchart of a method.

In the figures, identical or functionally identical elements have been given the same reference symbols, unless otherwise indicated. It should also be noted that the representations in the figures are not necessarily to scale.

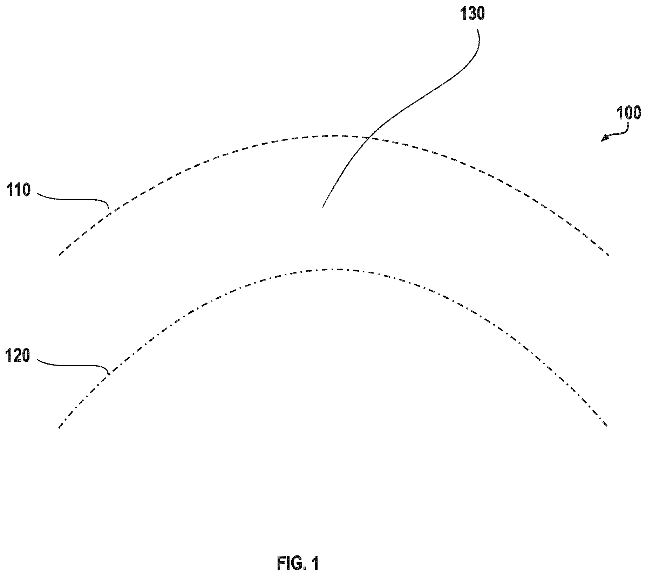

Fig. 1 shows an exemplary cross-sectional view of a lens 100.

An ophthalmic lens in general may be referred to as a vision-correcting or vision-enhancing optical device designed to be worn in direct contact with the eye (e.g., as a contact lens) or in close proximity to the eye (e.g., as glasses). It typically comprises a transparent material with specific refractive properties to modify light rays entering the eye, thereby improving visual acuity or addressing various vision defects. Ophthalmic lenses encompass a wide range of devices, including but not limited to spectacle lenses, contact lenses, intraocular lenses, and specialized lenses for treating specific eye conditions. These lenses may incorporate various optical features such as spherical, cylindrical, or prismatic power corrections, as well as advanced designs like multifocal, progressive, or aspheric profiles. They can be manufactured using different materials and may include additional elements such as coatings, filters, or diffractive structures to enhance their performance or provide additional functionalities. Such lenses may specifically be tailored to work in conjunction with the eye's natural optical system to produce clear, focused images on the retina, thereby correcting refractive errors like myopia, hyperopia, astigmatism, or addressing more complex visual needs.

Lens 100 comprises a first surface 110 and a second surface 120. The first surface 110 may be representative for a front surface of the lens 100, whereas the second surface 120 may be representative for a back surface of the lens 100. In some examples, the first surface 110 may be representative of a back surface of the lens 100, whereas the second surface 120 may be representative for a front surface of the lens 100.

In some examples, the back surface may represent a design surface, or a design surface characteristic, respectively, of the lens 100.

The first surface 110 may be associated with a design surface such as a design topology, i.e., a topology which follows ideal conditions to provide ideal optical properties for an intended application of the lens 100 (not expressly shown in Fig. 1). The design topology may be provided in absence of any unintended and undesired deformation of the first surface 110. That is, the first surface 110 may be parallel to the design topology or may at least partially coincide with the design topology. In some examples, the first surface 110 may also fully coincide with the design topology in case the first surface 110 reflects the design goals reflected by the design topology.

The first surface 110 may extend in parallel to the second surface 120 thereby forming a shell of a sphere 130 therebetween. It is emphasized that even though the depicted example assumes a spherical shell, also other design topologies may be possible. In some examples, the first surface 110 may be aspheric or atoridal, whereas the second surface 120 may be spheric or vice versa.

In some examples, the first surface 110 may not follow the design topology but may instead follow a physical topology (not expressly shown in Fig. 1). The physical topology may be deformed and/or shifted and/or rotated with respect to the design topology. As a result, the design topology may not fully coincide with the first surface 110 which may exhibit the physical topology.

The deviation of the physical topology (which may be represented by a plurality of measurement points that were acquired while sampling the physical topology) from the design topology may be referred to as a deviation. In some examples, this deviation may be seen as undesired as it may change the optical (transmission) properties (e.g., undesired birefringence, change of focal length, aberration, etc.) of the lens.

It will be appreciated that the physical topology may be sampled by means of a variety of different options to obtain the plurality of measurement points which may be indicative of the topology and thus of a potential deformation of the first surface 110 of the lens 100. The physical topology may, *inter alia,* be sampled by means of confocal microscopy, by means of optical interferometry and/or by means of another suitable method. That is, the plurality of measurement points may be acquired by means of, *inter alia,* each of the procedures discussed herein.

In further detail, confocal microscopy may be referred to as an advanced optical imaging technique that enables high-resolution, three-dimensional visualization of certain specimens. This method may employ a spatial pinhole to eliminate out-of-focus light, thereby significantly enhancing image contrast and resolution compared to conventional wide-field microscopy. In a confocal microscope, a laser beam may be focused onto a small spot within the sample, and the resulting fluorescence or reflected light is collected through the same optical path. The key feature is a confocal pinhole, which may allow only light from the focal plane to reach the detector, effectively rejecting light from above and below the focal plane. By scanning the focused beam across the sample (i.e., the surface of the ophthalmic or spectacle lens) in a raster pattern and collecting light at each point, a two-dimensional image of a thin optical section is generated. Multiple such optical sections can be acquired at different depths within the sample, enabling the reconstruction of three-dimensional structures. This technique offers several advantages, including improved axial and lateral resolution, reduced background noise, and the ability to perform optical sectioning of thick specimens without physical sectioning.

Additionally or alternatively, the empirically obtained data points may be obtained by means of optical interferometry. An interferometer may be referred to as a high-precision optical instrument which may be designed to measure the surface topography of lenses with nanometer-scale accuracy. It may utilize the principle of wave interference to compare the optical path difference between a reference wavefront and the wavefront reflected from the lens surface under test. The device typically consists of a coherent light source, such as a laser, a beam splitter, reference and test arms, and a detector system. The coherent light is split into two beams: one directed towards a reference surface and the other towards the lens surface being measured. These beams are then recombined, creating an interference pattern that is captured by the detector. The resulting fringe pattern provides detailed information about the surface profile of the lens, including its curvature, irregularities, and deviations from the ideal shape. Advanced interferometers may incorporate phase-shifting techniques, computerized fringe analysis, and stitching algorithms to enhance measurement accuracy and expand the measurable area. This non-contact measurement method is particularly valuable in the optical industry for quality control, lens design verification, and manufacturing process optimization, as it allows for rapid and precise characterization of complex lens surfaces, including aspheric and freeform optics.

Additionally or alternatively, the empirically obtained data points may be obtained by means of chromatic confocal microscopy. Chromatic confocal microscopy may be referred to as an advanced optical imaging technique that may utilize the longitudinal chromatic aberration of microscope optics to generate different focal planes for various wavelengths of light. This method may enable the creation of cross-sectional confocal images of a specimen without the need for axial scanning of the objective lens.

In chromatic confocal microscopy, a light beam may be focused onto a small point within a sample to be investigated, and the resulting fluorescence or reflected light may be collected through the same optical path. A confocal pinhole element may allow only light from the focal plane to reach the detector, blocking light from above and below the plane. By scanning the focused beam across the sample in a raster pattern and collecting light at each point, a two-dimensional image of a thin optical section is generated. Multiple such optical sections can be captured at different depths within the sample to reconstruct three-dimensional structures.

In some examples, the obtained data points may be obtained by means of a coordinate measuring machine (CMM). Generally, a CMM is a precision device that measures the geometry of physical objects (e.g., of a sampled surface of a lens) by sensing discrete points on the surface of the object with a probe. The measurement process involves moving the probe along three orthogonal axes (X, Y, and Z) in a three-dimensional Cartesian coordinate system. As the probe contacts or detects specific locations on the object's surface, the machine samples the axis position sensors, thus measuring the location of points on the object. This process is repeated as necessary to acquire a "point cloud" (i.e., a plurality of measurement points representing a (sampled) surface of a lens) that describes the surface areas of interest. The collected data points can be used to determine dimensions, shapes, and positions of features such as holes, slots, and surfaces, allowing for verification of part geometry against design specifications (e.g., against a design surface characteristic).

In some examples, the obtained data points may be obtained by means of a scanning acoustic microscopy (SAM), also known as Acoustic Micro Imaging (AMI) or Scanning Acoustic Tomography (SAT). SAM is referred to as a nondestructive imaging technique that uses high-frequency ultrasound waves to investigate, measure, and visualize the internal structure of objects such as a spectacle lens. This method employs focused sound waves, typically in the range of 80-120 MHz, to penetrate solid materials (such as a spectacle lens) and create detailed images of their internal features. SAM may be based on directing acoustic waves at a small point on the target object (e.g., spectacle lens) and a subsequent detection of the reflected, scattered, or transmitted waves. The data collected is then processed to calculate the speed of sound through the material (e.g., of the spectacle lens), which may correlate with its elasticity and hardness. By systematically scanning the entire region of interest, SAM can produce high-resolution images that reveal hidden defects such as voids, cracks, and delaminations and/or deformations from a design topology.

In some examples, the obtained data points may be obtained by acquiring a computed tomography (CT) image of the spectacle lens and by subsequently deriving the obtained data points from the CT image.

This technique may offer several advantages over other methods for acquiring empirically obtained data points, including improved axial and lateral resolution, reduced background noise, and the ability to perform optical sections of thick samples without physical cuts.

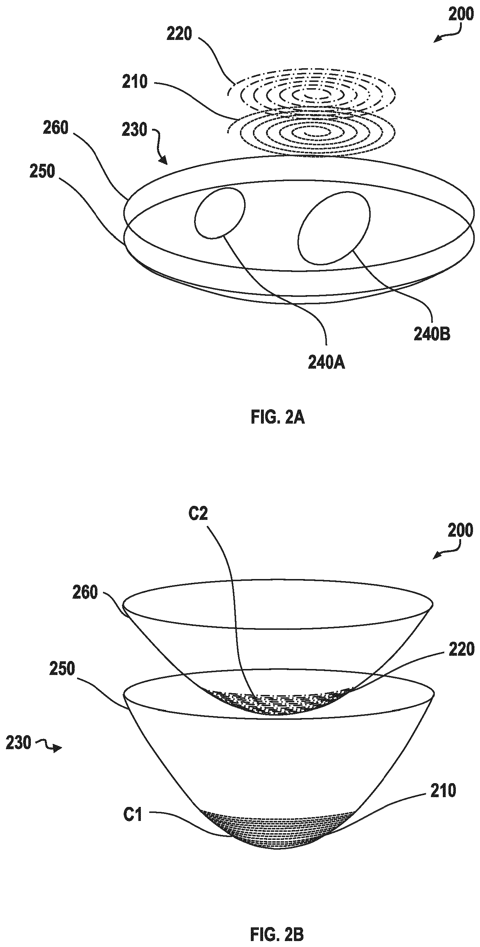

Figs. 2A and 2B show exemplary illustrations 200 of a sampled surface of a lens 230, such as an ophthalmic or spectacle lens, which corresponds to a plurality of measurement points which is to be orientated with respect to a design surface characteristic of said optical element.

More specifically, Fig. 2A shows an exemplary illustration 200 of a plurality of measurement points 210, 220 associated with respectively sampled surfaces 250, 260 of the lens 230.

The lens 230 may possess a front surface 250 and the lens may possess a back surface 260. In some examples, the front surface 250 of the lens 230 may lie further apart from an eye of a patient (e.g., when the lens 230 is worn as a seeing aid) as compared to the back surface 260.

The sampling may be representative for a plurality of measurement points obtained from sampling a front surface 210 and/or from sampling a back surface 220 of the lens 230.

The plurality of measurement points of the front surface 210 (e.g., the first surface 110) and/or the plurality of measurement points of the back surface 220 (e.g., the second surface 120) may be representative for at least a portion 240A or 240B of a front surface 250 and/or a back surface 260 of the lens 230, respectively. The front surface 250 and/or the back surface 260 of the lens 230 may be associated with a design surface characteristic of the lens 230. The design surface characteristic may be referred to as a design topology of the lens 230.

In some examples, an area of the portion 240A or 240B may be smaller than a respective area of the front surface 250 and/or of the back surface 260 of the lens 230.

Consequently, the acquired plurality of measurement points of the front surface 210 and/or the acquired plurality of measurement points of the back surface 220 may not unambiguously be aligned with respect to a respective portion 240A or 240B as no direct (absolute) reference for an alignment may be available. This may lead to an undesired ambiguity in aligning the acquired plurality of measurement points of the front surface 210 and/or the acquired plurality of measurement points of the back surface 220 to a respective portion 240A or 240B.

Further ambiguity may arise from the aspect that the reference frame in which the plurality of measurement points was acquired does not necessarily coincide with the reference frame of the design.

Fig. 2B shows an exemplary illustration 200 of a plurality of measurement points 210, 220 associated with a surface 250, 260 of the lens 230, wherein the plurality of measurement points 210, 220 has been aligned with respect to a design of the lens 230.

More specifically, Fig. 2B depicts the plurality of measurement points of the front surface 210 and the plurality of measurement points of the back surface 220 as outlined with respect to Fig. 2A, above. Moreover, Fig. 2B depicts the front surface 250 and the back surface 260 of the lens 230.

After executing a rotational alignment of the plurality of measurement points of the front surface 210 and/or of the plurality of measurement points of the back surface 220 as well as after executing a respective translational alignment of the rotationally aligned plurality of measurement points, an extremum C1 (e.g., a minimum) of the front surface 250 of the lens 230 may coincide with the respective plurality of measurement points of the front surface 210. Moreover, an extremum C2 (e.g., a minimum) of the back surface 260 of the optical element 260 may coincide with the respective plurality of measurement points of the back surface 220.

Therefore, according to aspects described herein, a reliable, efficient, and accurate alignment of a plurality of measurement points with respect to a design of an optical element may be facilitated.

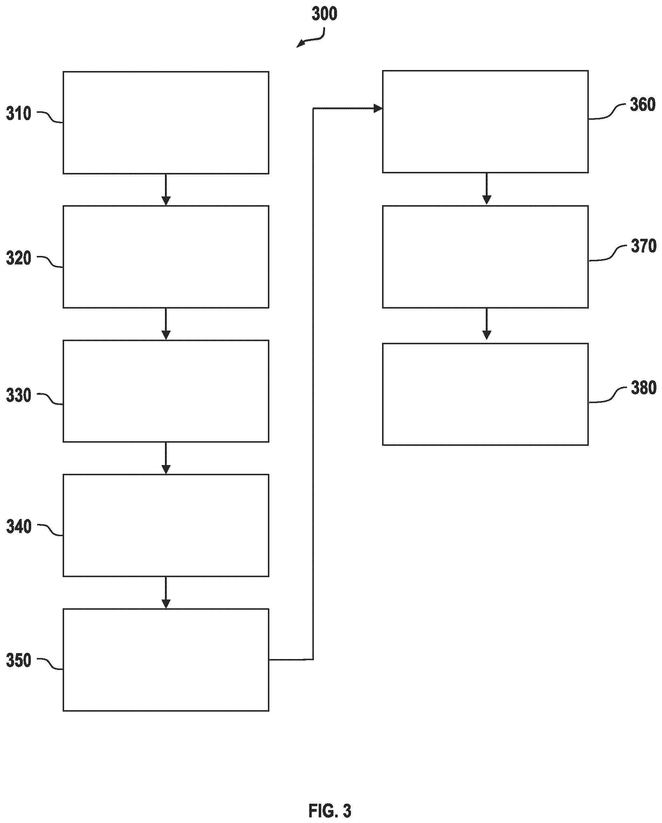

Fig. 3 shows an exemplary flowchart of a computer-implemented method 300 for aligning a plurality of measurement points that corresponds to a sampled surface (e.g., the sampled surface 250, 260) of a lens (e.g., the lens 100 or 230) with respect to a design surface characteristic of the lens. The plurality of measurement points may e.g., be the plurality of measurements points (210, 220) as discussed with reference to Figs. 2A and 2B, above. It will be appreciated that the flowchart outlined below may be seen as being representative for an exemplary workflow only. Other workflows, leading to the same result, may equally be applied.

When characterizing a lens, the respective lens may be placed in a measurement device. The inserting of the lens into the measurement device may lead to an (undesired) rotation (e.g., about an x-, a y- and/or a z-axis) and/or a translational movement of the lens. This rotation and/or translation of the lens may affect the characterization of the lens as a reference coordinate system, relative to which the lens may be referenced, may be shifted with respect to a reference coordinate system of a respective mounting stage the lens is placed on. Therefore, the acquired plurality of measurement points may be referenced relative to coordinate system of the measurement device which does not necessarily coincide with the coordinate system relative to which the lens is referenced to.

The rotational and/or translational manipulation of the plurality of measurement points, as a result of inserting the lens to a respective measurement device, is described in the following sections.

The acquired plurality of measurement points (as described elsewhere herein) may undergo a rotational alignment 310 as a result of inserting the lens into a measurement device. The rotational alignment may comprise determining a first angle β and preferably a second angle α about which the plurality of measurement points is to be rotated. In some examples, a rotation of the plurality of measurement points about the first angle β may be associated with a rotation about a first rotational axis. In some examples, a rotation of the plurality of measurement points about the second angle α may be associated with a rotation about a second rotational axis. In some examples, the first rotational axis may be linearly independent from the second rotational axis.

The rotational alignment 310 may, e.g., comprise a rotation of the plurality of measurement points about the first rotational axis such as, e.g., the y-axis of a Cartesian coordinate system. The rotation may comprise multiplying the respective plurality of measurement points with a respective rotation matrix that may describe the rotation about the respective first axis. The respective rotation matrix may read as ${R}_{y} \left(β\right) = \left(\begin{matrix}cos β & 0 & sin β \\ 0 & 1 & 0 \\ - sin β & 0 & cos β\end{matrix}\right) ,$ equation 1 wherein β denotes the respective first rotation angle.

Subsequent to the (exemplary) rotation about the y-axis, a rotation about the second rotational axis, e.g., the x-axis of the Cartesian coordinate system may be performed by taking advantage of a respective rotation matrix that may describe the rotation about the x-axis and a respective multiplying of the rotated plurality of measurement points by said rotation matrix. The rotation matrix for the rotation about the x-axis may read as ${R}_{x} \left(α\right) = \left(\begin{matrix}1 & 0 & 0 \\ 0 & cos α & - sin α \\ 0 & sin α & cos α\end{matrix}\right) ,$ equation 2 wherein α denotes the respective second rotation angle.

The rotation about the y-axis and about the x-axis may be referred to as a rotational alignment.

In some examples, a fitting 320 of the plurality of rotationally aligned measurement points to a theoretical expression may be executed. As a result, a fitted surface may be obtained. In some examples, the theoretical expression may be a polynomial as outlined above. The result may be a first fitted surface.

Subsequently, a determination of an extremum (330, e.g., of a minimum) of the plurality of measurement points may be executed based on which a subsequent translational alignment of the plurality of measurement points may be performed. The determination of the extremum of the plurality of measurement points may be executed on the plurality of measurement points (i.e., on the individual measurement points) and/or based on the aforementioned obtained first fitted surface.

Afterwards, a determination 340 of a metric difference between the determined extremum and of an extremum of the design surface characteristic may be executed. Subsequently, a translational alignment Δ*T* may be executed to bring the plurality of measurement points into coincidence with the design surface characteristic, e.g., by mapping the determined extremum of the plurality of measurement points to the determined extremum of the design surface characteristic to effectively minimize or fully compensate the metric difference.

In some examples, a fitting 350 of the translationally aligned plurality of measurement points to a theoretical expression such as, e.g., an aspherical surface may be executed to obtain a representation of the translationally aligned plurality of measurement points represented by a second fitted surface.

Subsequently, a determination 360 of a third angle γ may be executed based on which a rotation of the translationally aligned plurality of measurement points may be performed. The third angle γ may be representative for a rotation of the plurality of measurement points about a third rotational axis. In some examples, the third rotational axis may be linearly independent from the first rotational axis and from the second rotational axis. In this context, linear independence may be referred to the aspect that the third rotational axis may not be represented as a linear combination of the first rotational axis and of the second rotational axis.

The rotation may be facilitated by multiplying the translationally aligned plurality of measurement points by a respective rotational matrix representing a rotation about the z-axis of the Cartesian coordinate system, wherein the respective rotation matrix (corresponding to a rotation about the z-axis) may read as ${R}_{z} \left(γ\right) = \left(\begin{matrix}cos γ & - sin γ & 0 \\ sin γ & cos γ & 0 \\ 0 & 0 & 1\end{matrix}\right) ,$ equation 3 wherein *γ* denotes the respective third rotation angle.

The totality of the aforementioned mathematical operations *P̃* applied to the plurality of measurement points may be expressed by: ${P}^{˜} = {R}_{y} \left({R}_{x}\left(\left({R}_{z}P\right)+ΔT\right)\right) ,$ equation 4 wherein P denotes the plurality of measurement points and wherein *P̃* denotes the rotationally and translationally aligned plurality of measurement points.

Thus, equation 4 effectively describes the rotational and translational manipulation of a plurality of measurement data points (which may be defined in the aforementioned initial Cartesian coordinate system) when the lens is to be characterized.

An inversion of the alignment of the acquired plurality of measurement points may be facilitated by means of equation 5 as set out below: $P = {R}_{z}^{T} \left({R}_{x}^{T}\left({R}_{y}^{T}{P}^{˜}\right)-ΔT\right) .$ equation 5

Thus, equation 5 effectively describes an inverse transformation of the rotational and translational manipulation which may occur as a result of inserting the lens into a measurement device. As a result of applying equation 5 to the obtained plurality of measurement data points, the shifted data points may be rotated and/or translated back into the initial coordinate system. That is, by means of equation 5, the rotation and translation operations as described with reference to equations 1 to 4 may effectively be inverted.

In some examples, the computer-implemented method may comprise determining a symmetry in the design of the optical element. The determination of the symmetry of the design of the optical element may be pre-determined, i.e., known to an operator of the computer-implemented method or based on a heuristic assumption. In some cases, the operator may provide information associated with the symmetry of the optical element to the computer-implemented method.

It is emphasized that the order according to which the rotational and translational transformations are performed is irrelevant as long as they are done/inverted consistently.

In other words, alternative representations such as rotations based on Euler angles or quaternions are also possible, as well as other forms of representation.

In case of an exemplary presence of a folding symmetry, the rotationally and translationally aligned plurality of measurement points may fulfill the following equality conditions: $z \left(x, y\right) = z \left(-x,y\right) = z \left(x,-y\right) = z \left(-x,-y\right) .$ equation 6

This may equally be phrased in polar coordinates which reads as: $z \left(r, φ\right) = z \left(r,π-φ\right) = z \left(r,φ+π\right) = z \left(r,-φ\right) ,$ equation 7 where r denotes a radius indicating a shortest distance between an origin of a reference coordinate system and a data point that is represented by the polar coordinates. Moreover, *φ* denotes a respective polar angle taken in between, e.g., an x-axis and a respective data point z if a Cartesian coordinate system is assumed. The angle *φ* may be representative for an azimuth angle if a Cartesian coordinate system is considered.

In the presence of a folding symmetry of the optical element, an angular shift of the reference coordinate system associated with the plurality of measurement points by Δ (relative to its initial orientation) may follow the symmetry conditions in polar coordinates: $z \left(r,φ+Δ\right) = z \left(r,π-φ+Δ\right) = z \left(r,φ+π+Δ\right) = z \left(r,-φ+Δ\right) .$ equation 8

In some examples, a data point may be selected from the rotated representation.

In some cases, the data point may be selected from the rotationally and translationally aligned plurality of measurement points. Irrespective from that, the selected data point P_{k,I} may be represented in Cartesian and polar coordinates by ${P}_{k , I} = \left(\begin{matrix}{x}_{k , I} \\ {y}_{k , I}\end{matrix}\right) = \left(\begin{matrix}{r}_{k} cos \left({φ}_{k}\right) \\ {r}_{k} sin \left({φ}_{k}\right)\end{matrix}\right) ,$ equation 9 wherein x_{k,I} and y_{k,I} denotes the respective x- and y-components of the data point in Cartesian coordinates. The respective polar coordinates may be represented by rₖ indicating a radial distance of the respective data point from the origin of the coordinate system and *φₖ* (angular component) indicating an angular segment between the data point and the positive section of the x-axis of the Cartesian coordinate system.

Based on the selected data point, at least one symmetric partner, e.g., symmetric partner P_{k,II} may be determined by adding an offset value (e.g., an offset value of *π*) to the angular component (e.g., cos(*φₖ*)) of the selected data point: ${P}_{k , II} = \left(\begin{matrix}{x}_{k , II} \\ {y}_{k , II}\end{matrix}\right) = \left(\begin{matrix}{r}_{k} cos \left(π-{φ}_{k}\right) \\ {r}_{k} sin \left(π-{φ}_{k}\right)\end{matrix}\right) .$ equation 10

In an example, the offset value *φ_{offset}* between data points P_{k,I} and P_{k,II} may be derived from the relationship ${φ}_{offset} = π - 2 ⋅ {φ}_{k} .$ equation 11

Adding an offset value of *π* to the angular component of the selected data point may be equal to mirroring the selected data point to the third quadrant of the Cartesian coordinate system.

In case of a presence of an axis shift, the phase *φₖ* might shift by Δ, wherein $φ ∈ \left[Δ,\frac{π}{2}+Δ\right]$ equation 12 may apply.

In some examples, the rotationally and translationally aligned plurality of measurement points may be fitted to a theoretical expression, preferably to an expression such as an aspheric function. Based thereon, a respective representation of the plurality of data points may be obtained yielding a second fitted surface. As outlined above, this may support a determination of the at least one partner of the selected data point and may allow the determination of the at least one symmetric partner at coordinates at which no measurement points have been sampled. In such a case, the fitting may effectively interpolate in between spatially discrete measurement points.

Moreover, the fitting may allow the definition of a theoretical expression for estimating a topology value (e.g., an applicate value such as a z-value) for the rotationally and translationally aligned plurality of measurement points. The respective topology may thus be expressed as ${z}_{k , I} = f \left(\begin{matrix}{x}_{k , I} \\ {y}_{k , I}\end{matrix}\right) ,$ equation 13 wherein f(x,y) may be the representation obtained by fitting the rotationally and translationally aligned plurality of measurement points to the theoretical expression.

Based on equation 13, which may allow an assignment of a z-value to each of the selected points and the at least one symmetric partner, a score value may be calculated. The score value may be representative for how well the rotationally and translationally aligned plurality of measurement points coincides with the determined symmetry, i.e., whether the rotational (incl. the rotation about the third rotation angle) and translational alignment has indeed aligned the plurality of measurement points such that the aligned plurality of measurement points reflects the determined symmetry. In other words, the score value may be a measure for a deviation between the result of the rotational and translational alignment of the plurality of measurement points and the determined symmetry and thus of the design surface characteristic.

If the rotationally and translationally aligned plurality of measurement points perfectly matches the determined symmetry, the applicate values of the selected data point and of the at least one symmetric partner may be identical.

Based thereon, a calculation 370 of a score value may be executed that takes potential deviations between the applicate value of the selected data point and the applicate value of the at least one symmetric partner into account.

In an example, the calculation of the score value may comprise calculating the score value based on a plurality of selected data points and based on a plurality of determined symmetric partners. This may increase the statistical significance of the calculated score value.

The score value may be calculated based on the following equation, wherein the term *"RMS"* denotes respective root-mean-square values and wherein zⱼ denotes the obtained z-values in the j^{th} quadrant of the Cartesian coordinate system: S = (RMS(zII - zI) + RMS(zIII - zI) + RMS(zIV - zI) + RMS(zIII - zII) + RMS(zIV - zII) + RMS(zIV - zIII)). equation 14

It is emphasized, that equation 14 denotes one possible expression for calculating a respective score value. However, the method described herein is not limited to the calculation of a score value according to equation 14. Other expressions for calculating a score value may equally be applicable even though not expressly outlined herein.

In some examples, an implementation 370 of a feedback loop may be executed that leads to a repeated execution of the third rotation (or the plurality of rotationally and translationally aligned measurement points) about the third axis by the third angle, the derivation of the at least one symmetric partner and the calculation of the score value with the goal of determining a value for the third rotation angle such that the score value may be optimized (e.g., minimized or maximized). As a result, the axis of the reference frame in which the plurality of measurement points may have been acquired may be rotated such that the plurality of measurement points coincides with the design surface characteristic by taking the determined symmetry characteristic into account. Moreover, a repeated execution of the feedback loop 370 may allow an optimization of the aforementioned parameters associated with the rotational alignments and/or the translational alignments.

In case the back surface of the lens possesses a rotational symmetry, no determination of the third rotation angle may be required, and the score value may be calculated directly. Irrespective from that, the rotational alignment about the x-axis (based on equation 2) and about the y-axis (based on equation 1) may nevertheless be executed as well as the translational alignment ΔT (based on equation 5).

The computer-implemented method as described herein may effectively comprise determining 380 a set of alignment parameters which may be used to provide an optimized alignment of the plurality of measurement points to the design surface characteristic of the lens.

Any fitting procedures, as set out herein, may be based on a least-square minimizer. A least-square minimizer may be referred to as a mathematical algorithm or computational method designed to determine the optimal parameters of a model by minimizing the sum of the squared differences between observed data points and the corresponding values predicted by the model. The least-square minimizer may operate by iteratively adjusting the model parameters to reduce the overall discrepancy between the observed (e.g., measured data) and predicted (e.g., derived from a theory function) values, ultimately converging on a solution that provides the best fit according to the least-squares criterion.

Several algorithms may be implemented to perform a respective least-square minimization:
The Levenberg-Marquardt algorithm is a widely used method for solving nonlinear least squares problems. It combines the gradient descent method and the Gauss-Newton method, adapting its approach based on the proximity to the optimal solution. When coefficients are far from their optimal values, it behaves more like the gradient descent method, while it acts more like the Gauss-Newton method when coefficients are close to their optimal values. This adaptive nature makes it particularly effective for a wide range of optimization problems.

The Trust-Region-Reflective algorithm is another method suitable for both nonlinear and linear least-squares problems with bound constraints. It employs a subspace trust-region method to determine a search direction at each iteration, making it particularly effective for problems with complex constraint structures.

The Active-Set algorithm is another approach for linear least squares problems. It may be seen as particularly well-suited for problems with linear and bound constraints, iteratively refining the solution by adjusting the active set of constraints. In cases where robust least squares fitting is required, particularly when dealing with outliers in the data, the Iteratively Reweighted Least Squares (IRLS) algorithm is often employed. This method iteratively fits the model by weighted least squares, calculates and standardizes adjusted residuals, and then calculates robust weights as a function of these standardized residuals. This process is repeated until convergence, making it particularly effective at minimizing the influence of outliers on the fit.

The Gauss-Newton method is a fundamental algorithm for nonlinear least squares problems. It operates under the assumption that the least squares function is locally quadratic in the coefficients and seeks to find the minimum of this quadratic. This method forms the basis for many more advanced optimization algorithms and is particularly effective when the initial guess is close to the optimal solution.

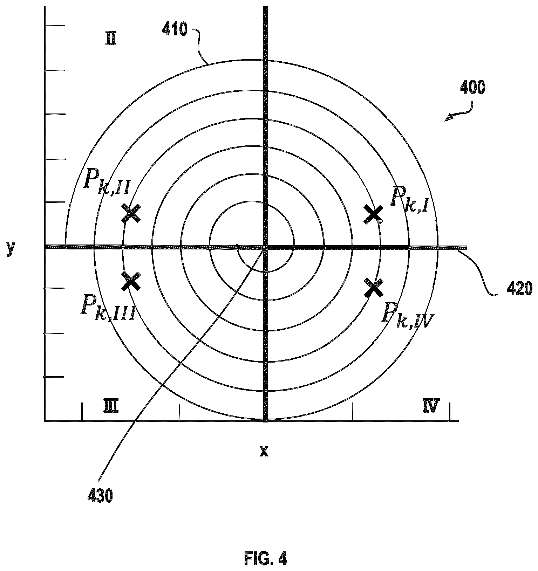

Fig. 4 shows an illustration 400 of the plurality of rotationally and translationally aligned measurement points 410 centered in a reference coordinate system 420.

The illustration 400 depicts the plurality of measurement points 410 centered with respect to an origin 430 of the reference coordinate system 420. In the exemplarily depicted case, the reference coordinate system 420 is a Cartesian coordinate system.

In the depicted example, the plurality of measurement points has been sampled along a trajectory of a spiral. In the depicted example, the plurality of measurement points 410 has been rotationally and translationally aligned with respect to the design surface characteristic of the lens such that the origin of the spiral coincides with the origin 430 of the reference coordinate system 420.

The illustration 400 further depicts a selected data point P_{k,I} which corresponds to a measurement point of the plurality of measurement points 410. Moreover, the illustration 400 depicts respectively derived symmetric partners P_{k,II}, P_{k,III} and P_{k,IV}. The selected data point lies in the first quadrant whereas the symmetric partners lie in the second quadrant, the third quadrant and the fourth quadrant, respectively.

Starting with the selected data point P_{k,I}, the at least one symmetric partner P_{k,II} may be derived by means of equation 10 as set out above. The further symmetric partners may be derived accordingly.

In the present exemplary case, a folding symmetry of the optical element may be assumed. That is, the surface in the first quadrant may perfectly match with the surface in the second quadrant when mapped onto it. Analogously, the surface in the second quadrant may match with the surface in the third quadrant and the third quadrant may match with the fourth quadrant.

Each of the selected data point P_{k,I} and derived symmetric partners P_{k,II}, P_{k,III} and P_{k,IV} may be associated with corresponding applicate values which may be obtained as described above. Based thereon, a score value may be calculated as described herein. In the present case, the calculation of the score value according to equation 13 may lead to a score value of nearly 0 indicating that the plurality of measurement points has been mapped in a nearly congruent manner with respect to the symmetry axes of the lens.

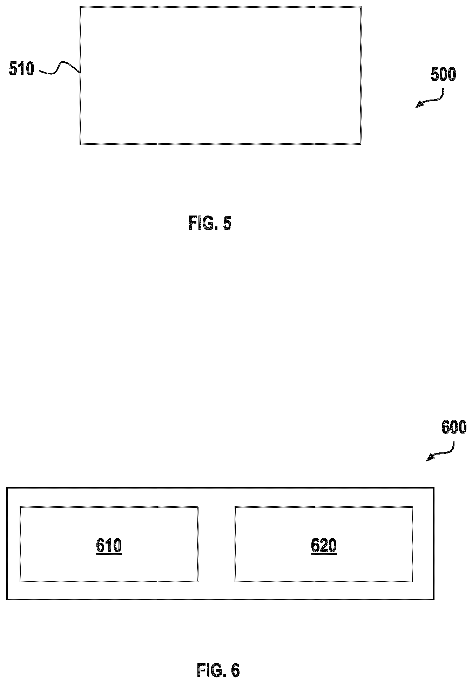

Fig. 5 shows a flowchart of a computer-implemented method 500 for determining an orientation of a sampled surface with respect to a design surface characteristic, wherein the sampled surface corresponds to a plurality of measurement points representing a surface of a lens, such as a spectacle lens.

In step 510, the determining of the orientation is performed using a symmetry characteristic of the design surface characteristic, wherein the orientation corresponds to an extremum of a function S, the function S providing a measure for a deviation of a subset of measurement points from the design surface characteristic, the subset of measurement points being chosen according to the symmetry characteristic.

Fig. 6 shows an exemplary computer-implemented device 600 for determining an orientation of a sampled surface with respect to a design surface characteristic, wherein the sampled surface corresponds to a plurality of measurement points representing a surface of a lens. The computer-implemented device 600 comprises means for carrying out 610 and/or means for executing 620.

The means for carrying out 610 are configured to carry out the steps of the computer-implemented method as set out herein.

Moreover, the means for executing 620 are configured to carry out the computer program as set out herein.

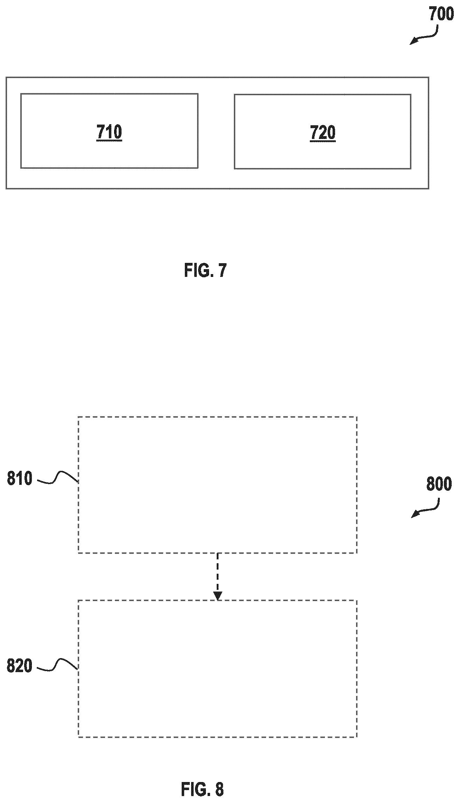

Fig. 7 shows an exemplary system 700 for determining an orientation of a sampled surface with respect to a design surface characteristic, wherein the sampled surface corresponds to a plurality of measurement points representing a surface of a lens. The system comprises a computer-implemented device 710 and a computer program 720.

The computer-implemented device 710 may be provided as the computer-implemented device 600.

The computer program 720 may be provided as the computer program set out herein.

Fig. 8 shows a flowchart of a method 800 being configured for designing and/or manufacturing of a lens.

In (optional) step 810, a virtual representation of a lens may be configured for the purpose of use for manufacturing said lens.

In (optional) step 820, a manufacturing of a lens based on output data of the computer-implemented method (e.g., the computer-implemented method 500) as set out herein may be executed.

In some examples, the method 800 may be computer-implemented.

Although the present invention has been described with reference to examples of embodiments, it can be modified in many ways.

### LIST OF REFERENCE SIGNS

- 100: lens
- 110: first surface
- 120: second surface
- 130: shell of sphere
- 200: illustrations
- 210: measurement points of front surface
- 220: measurement points of back surface
- 230: lens
- 240A: portion
- 240B: portion
- 250: front surface of the lens
- 260: back surface of the lens
- 300: computer-implemented method
- 310: rotational alignment
- 320: fitting to theoretical expression
- 330: determining an extremum
- 340: determining a metric difference and translational alignment
- 350: fitting to theoretical expression
- 360: determining of third rotation angle
- 370: calculation of score value
- 400: illustration
- 410: plurality of aligned measurement points
- 420: reference coordinate system
- 430: origin
- 500: computer-implemented method
- 510: step
- 600: computer-implemented device
- 610: means for carrying out
- 620: means for executing
- 700: system
- 710: computer-implemented device
- 720: computer program
- 800: method
- 810: step
- 820: step
- C1: tip portion of front surface
- C2: tip portion of back surface

## Claims

1. A computer-implemented method (500) configured for determining an orientation of a sampled surface with respect to a design surface characteristic, wherein the sampled surface corresponds to a plurality of measurement points (210, 220) representing a surface of a spectacle lens (100);
**characterized in that**
the determining (510) of the orientation is performed using a symmetry characteristic of the design surface characteristic,
wherein the orientation corresponds to an extremum of a function S, the function S providing a measure for a deviation of a subset of measurement points (210, 220) from the design surface characteristic, the subset of measurement points being chosen according to the symmetry characteristic.

2. The computer-implemented method of claim 1, wherein the determining comprises executing at least one rotational transformation of the plurality of measurement points about a first rotational axis and/or at least one translational transformation of the plurality of measurement points (210, 220).

3. The computer-implemented method of claim 2, wherein the executing of the at least one rotational transformation and/or translational transformation is repeated iteratively.

4. The computer-implemented method of one of the claims 2 or 3, wherein the determining further comprises:
determining a mathematical fit (320) of the plurality of measurement points (210, 220) to a surface of the spectacle lens to obtain a first fitted surface;
determining an extremum (330) of the first fitted surface with respect to a coordinate system;
determining an extremum (330) of the design surface characteristic with respect to a coordinate system; and
executing the translational transformation to overlap the determined extremum of the first fitted surface with the determined extremum of the design surface characteristic.

5. The computer-implemented method of one of the claims 2 to 4, wherein the determining of the orientation further comprises:
executing at least one additional rotational transformation about a second rotational axis that is linearly independent from the first rotational axis.

6. The computer-implemented method of claim 5, wherein the determining of the orientation further comprises:
selecting the subset of measurement points from the plurality of measurement points (210, 220);
determining at least one symmetric partner for each measurement point of the subset of measurement points based on the symmetry characteristic;
determining an applicate value for each one of the at least one symmetric partner; and
determining a value of the function S (370) based on an applicate value of the at least one measurement point of the selected subset of measurement points and the applicate value of the determined at least one symmetric partner.

7. The computer-implemented method of claim 6, wherein the determining of the applicate value for each one of the at least one symmetric partner is determined based on a mathematical fit of the plurality of measurement points (210, 220) to an expected shape of the design surface characteristic (350) to obtain a second fitted surface.

8. The computer-implemented method of one of the claims 6 or 7, wherein the determining of the orientation further comprises:
iteratively repeating the selecting of the measurement point, the determining of the at least one symmetric partner and the determining of the value of the function S (350) for different rotation angles of the at least one rotational transformation and/or for different translations of the translational transformation.

9. The computer-implemented method of one of the preceding claims, wherein the design surface characteristic is a design surface characteristic of a spectacle lens (100) representing refractive parameters intended for manufacturing.

10. The computer-implemented method of one of the preceding claims wherein the symmetry characteristic is one of a folding symmetry, a reflection symmetry, a rotation symmetry, a mirror symmetry, a line symmetry, or a mirror-image symmetry, or an expected violation or an expected absence of one of the symmetry characteristics.

11. The computer-implemented method of one of the preceding claims, wherein the function S is representative for a score value that quantifies the deviation of the subset of measurement points from the design surface characteristic.

12. A computer program comprising instructions which, when the program is executed by a computer, cause the computer to carry out the steps of the computer-implemented method of one of the claims 1 - 11.

13. A computer-implemented device (600) for determining an orientation of a sampled surface with respect to a design surface characteristic, wherein the sampled surface corresponds to a plurality of measurement points (210, 220) representing a surface of a spectacle lens (100), comprising:
means for carrying out (610) the steps of the computer-implemented method of one of the claims 1 - 11; and/or
means for executing (620) the computer program of claim 12.

14. A method (700) being configured for (a) designing (710) a virtual representation of a spectacle lens (100) configured for the purpose of use for manufacturing said spectacle lens (100) and/or (b) manufacturing (720) a spectacle lens (100) based on output data of the computer-implemented method of one of claims 1 - 11.

15. A data set (a) stored on a computer-readable medium or (b) carried by a data signal, the data set comprising data containing computer-readable instructions for controlling one or more manufacturing machines in order to produce a spectacle lens (100) based on the output data of the method of one of claims 1 - 11.
